Europäisches Patentamt

(19) European Patent Office

Office européen des brevets

(11) Publication number: **0 263 845 B1**

# (12) EUROPEAN PATENT SPECIFICATION

(45) Date of publication of patent specification:
**18.12.91 Bulletin 91/51**

(51) Int. Cl.⁵: **H04B 10/00, H04L 27/14**

(21) Application number: **87901579.0**

(22) Date of filing: **11.03.87**

(86) International application number:
**PCT/GB87/00167**

(87) International publication number:
**WO 87/05761 24.09.87 Gazette 87/21**

(54) **IMPROVEMENTS RELATING TO COMMUNICATION SYSTEMS.**

(30) Priority: **11.03.86 GB 8605964**

(43) Date of publication of application:
**20.04.88 Bulletin 88/16**

(45) Publication of the grant of the patent:
**18.12.91 Bulletin 91/51**

(84) Designated Contracting States:
**AT BE CH DE FR GB IT LI LU NL SE**

(56) References cited:
**EP-A- 0 071 309**
**GB-A- 2 137 836**

(56) References cited:
**Patent Abstracts of Japan, volume 8, no. 4, 10 January 1984, page 1441E220, & JP A 58-171138**
**Optic Letters, volume 4, no. 1, January 1979, (New York, US), H. Takahashi et al.: "Optical two-way transmission", pages 24-26**

(73) Proprietor: **ROKE MANOR RESEARCH LIMITED**
**Romsey, Hampshire, SO51 0ZN (GB)**

(72) Inventor: **WADE, Christopher, Antony**
**17 Ashton Cross, East Wellow**
**Romsey, Hampshire SO51 6AY (GB)**

(74) Representative: **Fish, Norman Ernest**
**Intellectual Property Department Roke Manor**
**Research Ltd. Vicarage Lane**
**Ilford, Essex IG1 4AQ (GB)**

EP 0 263 845 B1

Jouve, 18, rue Saint-Denis, 75001 PARIS

## Description

This invention relates to duplex communication systems and relates more specifically to such systems utilising optical fibre communication paths.

One of the problems that arises with optical fibre duplex communication systems is the occurrence of electrically induced cross-talk between the transmitter and receiver located in close proximity with one another and optically induced cross-talk due to the reflection of transmitted optical signals to the receiver input via optical directional coupling means utilised for coupling the transmitter output optical fibre and the receiver input optical fibre to a single bi-directional optical fibre communication path.

One known arrangement for the cancellation of optical cross-talk caused by optical reflection at optical fibre end faces is disclosed in Optical Letters, Volume 4, No 1, January 1979, to which attention is hereby directed.

According to the present invention there is provided a duplex communication system comprising a transmitter for deriving from a frequency modulated electrical carrier signal a corresponding optical signal for transmission over a bi-directional optical fibre communication path, a receiver for providing from a received frequency modulated optical signal a corresponding electrical signal, an optical directional coupler through which the optical signal from the transmitter is arranged to be fed to the bi-directional optical fibre communication path and through which the received optical signal is arranged to be fed to the receiver, characterised by two mixers one of which is fed with electrical signals corresponding to transmitted and received optical signals including the cross-talk components and the other of which is fed with those electrical signals in phase-shifted relationship, a filtering and demodulating arrangement to which the output from the mixer arrangement is arranged to be fed and by a subtractor circuit in which a sample of the modulation carried by the transmitted signal is arranged to be subtracted from the demodulated received signal whereby unwanted feedback of the transmitted signal via the directional coupler and electrically-induced cross-talk signals are substantially cancelled.

The use of two mixers in such relationship overcomes any ambiguities due to the folding of the spectrum about zero frequency.

By way of example an embodiment of the present invention will now be described with reference to the accompanying single-figure drawing.

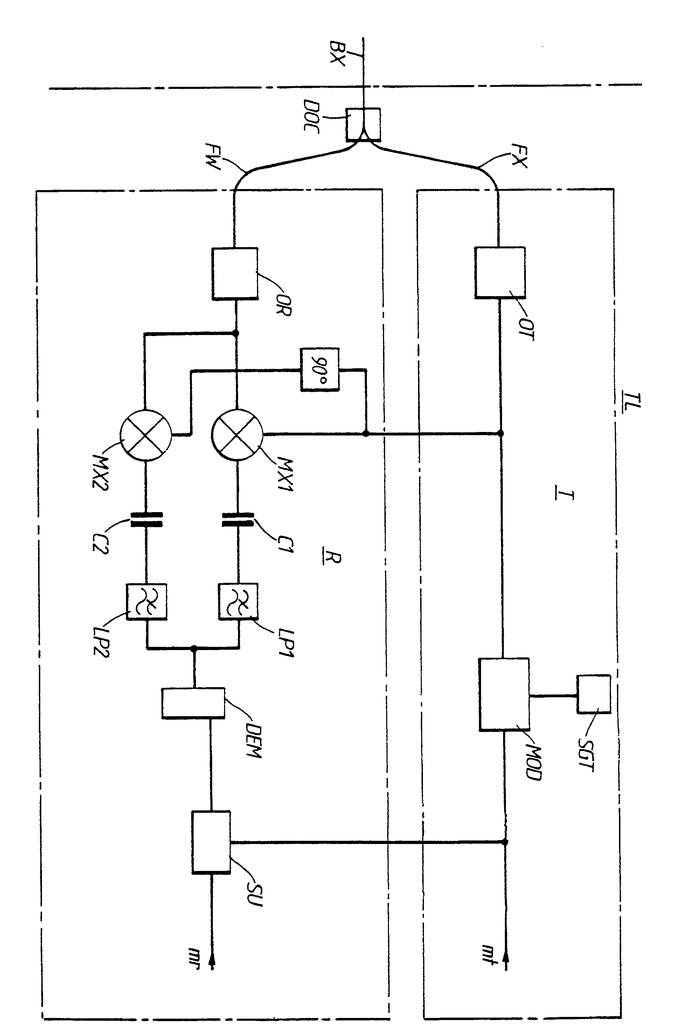

Referring to the drawing, an optical duplex communication system comprises a transmitter T and a receiver R located in close proximity with one another at a common transmitter/receiver terminal TL.

The transmitter T comprises a signal generating means SGT for generating an electrical carrier signal of constant amplitude having a centre frequency $ft$ and a modulator MOD for frequency modulating the carrier signal with a baseband modulation signal $mt$. The frequency modulated electrical output from the modulator MOD is fed to an optical transmitter OT which converts the modulated electrical signal into a corresponding optical signal which is then launched into an optical fibre FX coupled to a bi-directional communication path optical fibre BX by means of a directional optical coupler DOC.

The receiver R comprises an optical receiver OR which is arranged for receiving from the optical fibre BX via the optical directional coupler DOC and an input optical fibre FW an optical signal of centre carrier frequency $fr$ of constant amplitude and frequency modulated by a baseband modulation signal $mr$. Due to reflections that occur at the directional coupler DOC and at other optical connectors (not shown) in the optical fibre BX near to the transmitter/receiver terminal TL the received signal will also include components (i.e. cross-talk components) of the modulated transmitted signal. Electrically-induced cross-talk components of the transmitted signal may also be present in the received signal. In other to cancel these unwanted components electrical signals corresponding to the transmitted and received signals are fed into a mixer MX1 while electrical signals corresponding to the received signal and a phase-shifted (e.g. quadrature) transmitted signal are fed into a second mixer MX2. These mixers MX1 and MX2 produce outputs resulting from the multiplication of their input signals. The outputs therefore contain components at four frequencies, that is to say, $ft + fr$, $fr - ft$, $2ft$ and 0 (i.e. a d. c. component). The magnitude of the d.c. component will depend on the relative phases of the two signals at $ft$ entering the mixers MX1 and MX2. The d.c. components of the mixer outputs will be removed by the capacitors C1 and C2 in the respective output paths after which signals at the frequencies $ft + fr$ and $2ft$ will be removed by the low-pass filters LP1 and LP2. This leaves in both of the outputs a component at frequencies $fr - ft$ which is frequency modulated by a baseband signal $mr - mt$. This frequency modulated signal is then fed to a demodulator DEM which provides an output corresponding to the modulation signal $mr - mt$. As can be seen, the transmitted signal modulation signal $mt$ and the modulation signal $mr - mt$ are fed to a subtractor SU which cancels the signal $mt$ to provide an output corresponding to the modulation signal of the received signal $mr$.

As will readily be appreciated, the cancellation of the cross-talk components from the received signal will only occur when the transmitted signal is of constant amplitude and frequency or phase modulated as described above. If amplitude modulation of the transmitted signal occurs then the d.c. output of the modulator will be amplitude modulated and this signal will not be blocked by the coupling capacitors C1 and C2.

Consequently, the system according to the present invention uses analogue frequency modulation for an analogue optical fibre modulator/demodulator or a frequency-shift keying for a digital modulator/demodulator arrangement.

## Claims

1. A duplex communication system comprising a transmitter (T) for deriving from a frequency modulated electrical carrier signal a corresponding optical signal for transmission over a bi-directional optical fibre communication path (BX), a receiver (R) for providing from a received frequency modulated optical signal a corresponding electrical signal, an optical directional coupler (DOC) through which the optical signal from the transmitter is arranged to be fed to the bidirectional optical fibre communication path (BX) and through which the received optical signal is arranged to be fed to the receiver (R), characterised by two mixers one of which (MX1) is fed with electrical signals corresponding to the transmitted and received optical signals including the cross-talk components and the other of which (MX2) is fed with those electrical signals in phase-shifted relationship, a filtering and demodulating arrangement (LP1, LP2, DEM) to which the output from the mixers (MX1, MX2) is arranged to be fed and by a subtractor circuit (SU) in which a sample of the modulation carried by the transmitted signals is arranged to be subtracted from the demodulated received signal whereby unwanted feedback of the transmitted signal via the directional coupler (DOC) and electrically induced cross-talk signals are substantially cancelled.

2. A duplex communication system as claimed in claim 1, characterised in that the phase-shifted relationship is quadrature relationship.

3. A duplex communication system as claimed in claim 1 or claim 2, characterised in that the filtering arrangement comprises capacitors (C1, C2) and low-pass filters (LP1, LP2).

## Patentansprüche

1. Ein Duplex-Kommunikations- resp. Uebertragungssystem, umfassend einen Sender (T), für das Herleiten eines entsprechenden, optischen Signales aus einem frequenzmodulierten, elektrischen Trägersignal für die Uebertragung über einen doppelt gerichteten (bi direktionalen) optischen Faser-Uebertragungspfad (BX); einen Empfänger (R) für das Erzeugen eines entsprechenden, elektrischen Signales von einem empfangenen, frequenzmodulierten, optischen Signal; einen optischen Richtungskoppler (DOC), durch welchen das optische Signal vom Sender angeordnet wird, um an den doppelt gerichteten, optischen Faser-Kommunikationspfad (BX) gespiesen zu werden und durch welchen das empfangene, optische Signal angeordnet wird, um an den Empfänger (R) eingespiesen zu werden, gekennzeichnet durch: zwei Mischer, wovon einer (MX1) mit elektrischen Signalen entsprechend der übertragenen und empfangenen, optischen Signalen gespiesen wird, mit einschliessend die Kreuzkopplungs-Komponenten, und der andere davon (MX2) mit diesen elektrischen Signalen in phasenverschobenem Verhältnis gespiesen wird, eine Filtrier- und Demodulationsanordnung (LP1, LP2, DEM), an welche die Ausgabe von den Mischern (MX1, MX2) zugeordnet wird, um eingespiesen zu werden, und einen Subtrahier-Schaltkreis (SU), in welchem eine Probe resp. ein Wert der Modulation, die durch das übertragene Signal übertragen wird, angeordnet wird, um vom demodulierten, empfangenen Signal subtrahiert zu werden, wodurch unerwünschte Rückkopplung des übertragenen Signals via dem Richtungskoppler (DOC) und elektrisch induzierte Kreuzkopplungs-Signale im wesentlichen aufgehoben werden.

2. Ein Duplex-Kommunikations- resp. Uebertragungssystem nach Anspruch 1, dadurch gekennzeichnet, dass das Phasenverschiebungs-Verhältnis ein Quadratur- bzw. 90° verschobenes Phasen-Verhältnis ist.

3. Ein Duplex-Kommunikations- resp. Uebertragungssystem nach einem der Ansprüche 1 oder 2, dadurch gekennzeichnet, dass die Filtrieranordnung Kondensatoren (C1, C2) und Breitband- resp. Tiefpassfilter (LP1, LP2) umfasst.

## Revendications

1. Système de communications en duplex, comprenant un émetteur (T) destiné à dériver, d'un signal de porteuse électrique modulé en fréquence, un signal optique correspondant destiné à être transmis par un trajet bidirectionnel (BX) de communications à fibre optique, un récepteur (R) destiné à former, à partir d'un signal optique reçu modulé en fréquence, un signal électrique correspondant, un coupleur optique directionnel (DOC) par l'intermédiaire duquel un signal optique de l'émetteur est destiné à être transmis au trajet bidirectionnel (BX) de communications à fibre optique et par lequel le signal optique reçu est destiné à parvenir au récepteur (R), caractérisé par deux mélangeurs dont un premier (MX1) reçoit des signaux électriques correspondant aux signaux optiques émis et reçus, contenant les composantes de diaphonie, et dont l'autre (MX2) reçoit les signaux électriques à un état déphasé, un circuit de filtrage et de démodulation (LP1, LP2, DEM) auquel les signaux de sortie des mélangeurs (MX1, MX2) sont destinés à être transmis, et un circuit de soustraction (SU) dans lequel un échantillon de la modulation des signaux émis est destiné à être soustrait du signal reçu démodulé de manière que la rétroaction indésirable du signal transmis par le coupleur directionnel (DOC) et les signaux de diaphonie induits électriquement soient pratiquement compensés.

2. Système de communications en duplex selon la revendication 1, caractérisé en ce que le déphasage relatif correspond à une relation de quadrature.

3. Système de communications en duplex selon la revendication 1 ou 2, caractérisé en ce que le dispositif de filtrage comprend des condensateurs (C1, C2) et des filtres passe-bas (LP1, LP2).